(19) Europäisches Patentamt

European Patent Office

Office européen des brevets

(11) **EP 0 627 995 B1**

(12) **FASCICULE DE BREVET EUROPEEN**

(45) Date de publication et mention
de la délivrance du brevet:
**23.10.1996 Bulletin 1996/43**

(21) Numéro de dépôt: **93904002.8**

(22) Date de dépôt: **22.02.1993**

(51) Int. Cl.⁶: $B60C\ 5/00$, $B60C\ 5/18$

(86) Numéro de dépôt international:
**PCT/EP93/00411**

(87) Numéro de publication internationale:
**WO 93/16890 (02.09.1993 Gazette 1993/21)**

(54) **PNEUMATIQUE A PLUSIEURS SECTEURS INDEPENDANTS AMOVIBLES ET RENFORCES**

LUFTREIFEN MIT MEHREREN UNABHAENGIGEN, VERSTELLBAREN UND VERSTAERKTEN SEKTOREN

TYRE HAVING A PLURALITY OF INDEPENDENT REMOVABLE AND REINFORCED SECTORS

(84) Etats contractants désignés:
**BE DE ES FR GB LU SE**

(30) Priorité: **28.02.1992 FR 9202483**

(43) Date de publication de la demande:
**14.12.1994 Bulletin 1994/50**

(73) Titulaire: **COMPAGNIE GENERALE DES ETABLISSEMENTS MICHELIN - MICHELIN & CIE
63040 Clermont-Ferrand Cédex (FR)**

(72) Inventeurs:
• **GERGELE, Jean**
**F-63140 Chatel-Guyon (FR)**
• **LE GALL, Armand**
**F-63000 Clermont-Ferrand (FR)**
• **POMPIER, Jean-Pierre**
**F-63530 Volvic (FR)**
• **REMOND, Michel**
**F-63200 Riom (FR)**

(74) Mandataire: **Devaux, Edmond-Yves**
**Michelin & Cie
Service SRK. Brevets
23, Place des Carmes
63040 Clermont-Ferrand Cédex (FR)**

(56) Documents cités:
**FR-A- 354 950**          **FR-A- 380 768**
**FR-A- 1 529 882**          **GB-A- N 457**
**US-A- 4 153 094**

## Description

L'invention concerne un pneumatique formé de plusieurs secteurs pneumatiques montés sur une même jante et circonférentiellement adjacents, chaque secteur étant gonflé, et amovible de manière à pouvoir être remplacé aisément dans le cas où il aurait été endommagé. L'invention concerne également l'ensemble du pneumatique avec une jante de montage adaptée aux secteurs dudit pneumatique.

Bien que tous les types de pneumatique puissent être concernés, il est connu que ce sont les pneumatiques pour engins de Génie Civil, roulant dans des mines à ciel ouvert ou souterraines, dans les chantiers de toute sorte, qui sont sujets de la part du sol à de nombreuses agressions. Ils nécessitent donc, plus que tout autre pneumatique, des démontages, des réparations, des remontages fréquents, à moins d'être classés déchets et mis au rebut dans de nombreux cas avant qu'ils soient convenablement usés. Les dimensions des pneumatiques concernés étant les plus grandes et en outre s'accroissant régulièrement dans le temps, les problèmes sont aggravés : les démontages, les réparations et les remontages demandent des moyens de plus en plus volumineux et de plus en plus onéreux.

En outre, de tels pneumatiques exigent pour leur fabrication des moyens devenant gigantesques, que ce soit de confection, de cuisson ou de manutention, alors que les aires de stockage nécessaires deviennent démesurées. Au vu de l'accroissement des dimensions existantes et souhaitées par les constructeurs et les utilisateurs d'engins de Génie Civil, un autre problème existe : celui du transport de tels pneumatiques.

Le principe de fabriquer un pneumatique fait de plusieurs secteurs gonflables, indépendants les uns des autres, démontables individuellement de la jante, est largement connu par l'art antérieur et on peut citer les brevets américains US-A-1 233 853, US-A-1 311 806, US-A-1 322 685 ou US-A-4 153 094. Ces documents, pour la plupart anciens, concernent soit des secteurs pneumatiques fermés, soit des systèmes permettant à ces secteurs d'être étanches. Le brevet US 4 153 094 décrit en particulier un système d'accrochage où une tringle circulaire renforce le bourrelet circulaire d'un secteur pneumatique. Cette tringle étant percée de trous le long de son pourtour, le secteur est alors attaché par vissage à un plateau lui-même fixé à une jante plate.

Le brevet français FR-A-380 768 montre un pneumatique à secteurs pneumatiques correspondant au préambule de la revendication 1.

L'invention répond à une double préoccupation. Premièrement, les secteurs amovibles gonflables se doivent d'être résistants aux agressions du sol, que ce soit isolément ou pris dans leur ensemble. En effet, lors du roulage, plusieurs secteurs sont simultanément chargés et en contact avec le sol : une certaine cohésion entre secteurs est nécessaire pour que les efforts soient répartis sur tous les secteurs concernés. En second lieu les secteurs amovibles doivent avoir une structure telle que leurs montage et démontage de la jante soit aisée et rapide.

Ainsi, conformément à l'invention, le pneumatique constitué de plusieurs secteurs pneumatiques identiques, gonflables , amovibles et circonférentiellement adjacents lorsqu'ils sont montés sur une jante adaptée à base circulairement continue, chaque secteur de hauteur sur jante (H), de largeur méridienne (B), de largeur circonférentielle (C), comprenant une bande de roulement réunie à quatre flancs, deux de ces flancs étant circonférentiellement adjacents aux flancs des secteurs voisins et les deux autres formant les flancs du pneumatique, est caractérisé en ce que les flancs se terminent respectivement par des bourrelets méridiens non liés à la jante de montage et renforcés par des tringles méridiennes et par des bourrelets circonférentiels assurant le montage des secteurs sur la jante et renforcés par des tringles circonférentielles liées aux tringles méridiennes et auxquelles au moins une armature de renfort de fils ou câbles inextensibles est ancrée, cette armature étant, au sommet du secteur, radialement juxtaposée à au moins une armature de renforcement de la bande de roulement.

L'armature de renfort, peut être formée d'au moins une nappe de fils ou câbles radiaux, c'est-à-dire dans des plans contenant l'axe de rotation du pneumatique. Elle peut aussi être avantageusement formée d'au moins deux nappes de fils ou câbles, parallèles entre eux dans chaque nappe, et croisés d'une nappe à la suivante.

Par radialement juxtaposée, il faut comprendre que l'armature de renforcement de la bande de roulement peut être disposée soit radialement sur l'armature de renfort soit radialement sous l'armature de renfort.

L'armature de renfort est ancrée aux tringles circonférentielles dites tringles de montage : par le terme ancrée il faut entendre qu'elle peut être enroulée autour de ces tringles circonférentielles en formant des retournements, comme connu en soit, mais qu'elle peut être aussi reliée à ces tringles circonférentielles par d'autres moyens, et en particulier, de manière avantageuse, par le moyen de nappe(s) de renforcement additionnelle(s) enroulée(s) autour des tringles circonférentielles et entre les bords desquelles viennent s'insérer les bords de la nappe radiale.

De manière préférentielle, les nappes de renforcement additionnelles sont formées de fils ou câbles faisant avec la direction circonférentielle du pneumatique un angle faible compris entre 30° et 60°.

Dans le cas d'une armature de renfort dite radiale, elle peut être avantageusement formée d'un unique fil ou câble qu'on a enroulé autour des deux tringles circonférentielles respectivement, ce qui permet avantageusement d'éviter toutes les dégradations dues à des cisaillements internappes, tout en assurant un excellent ancrage.

Vu dans un plan radial, le profil méridien de l'armature de renfort présente avec le profil méridien de l'armature de renforcement de la bande de roulement deux points d'intersection situés symétriquement de part et d'autre du plan équatorial. Il est avantageux que ces points d'intersection correspondent aux extrémités axiales de l'armature de renforcement, et que le profil méridien de l'armature de renfort ait en ces points des tangentes faisant avec l'axe de rotation de l'ensemble pneumatique des angles ($\varnothing_A$) tel que

$$\frac{R_A^{\,2} - R_E^{\,2}}{2R_A}\, \text{tg}\, \varnothing = \lambda \; ,$$

lorsque le secteur est monté sur jante et gonflé à sa pression de service,

$R_A$ étant le rayon des points (A) d'intersection entre le profil méridien de l'armature de renfort et le profil méridien de l'armature de renforcement de la bande de roulement,

$R_E$ étant le rayon du point E du profil méridien de l'armature de renfort le plus éloigné axialement du plan équatorial de l'ensemble pneumatique, et $\lambda$ étant la largeur, mesurée axialement, de l'armature de renforcement de la bande de roulement. Il est alors particulièrement avantageux, afin que ce profil méridien soit le plus stable possible, que l'armature de renfort soit, dans la région du sommet du secteur, disposée radialement au dessus de l'armature de renforcement de la bande de roulement, armature de renforcement qui aura une rigidité méridienne de flexion élevée. Il faut entendre par rigidité méridienne de flexion, si F est la force nécessaire pour obtenir la flèche (e) d'une armature de renforcement encastrée de longueur circonférentielle unité et de largeur axiale L, le rapport $F/\frac{e}{L}$ . Cette rigidité de flexion méridienne sera dite élevée si elle est au moins égale à 350 daN par mm de longueur circonférentielle.

L'armature de renforcement de la bande de roulement peut être formée d'une ou plusieurs couches de renforcement, formées de nappes de fils ou câbles ou lames, textiles, plastiques ou métalliques, orientés par rapport à la direction circonférentielle de l'ensemble des secteurs selon des angles nuls, droits, aigus, égaux ou différents, le nombre de ces nappes caoutchoutées étant fonction de la résistance de l'armature ainsi formée. Il peut aussi s'agir de plaques de matériau composite plastique, c'est-à-dire de couche de matière plastique dans laquelle sont incluses des fibres courtes ou longues. Les plaques peuvent aussi être constituées de matière plastique seule, non armée, ou en métal, et peuvent être utilisées seules ou en complément de nappes usuelles de fils ou câbles.

Les deux tringles méridiennes qui renforcent les bourrelets méridiens sont des tringles se trouvant dans des plans méridiens ou radiaux du pneumatique formé par les secteurs adjacents, lesdits plans méridiens ou radiaux étant des plans contenant l'axe de rotation du pneumatique, les deux tringles circonférentielles étant dans des plans parallèles au plan équatorial et perpendiculaires à l'axe de rotation du pneumatique formé par les secteurs. Les tringles méridiennes et les tringles circonférentielles ne sont pas indépendantes les unes des autres mais sont liées entre elles.

Les flancs de secteurs circonférentiellement adjacents les uns aux autres, ou flancs intersecteurs peuvent être constitués d'un simple vulcanisat. De manière préférentielle, ils seront renforcés par une armature de carcasse d'au moins une nappe de fils ou câbles inextensibles, nappe dont les bords seront ancrés aux tringles méridiennes.

Cette armature de carcasse est une armature dont les fils ou câbles inextensibles suivent un tracé selon un profil déterminé allant d'une tringle méridienne à la tringle méridienne circonférentiellement opposée. L'ensemble des fils ou câbles peut couvrir entièrement la surface, qui n'est pas de révolution, comprise entre les tringles méridiennes et les tringles circonférentielles. Mais l'armature de carcasse peut être aussi partielle, les fils ou câbles couvrant seulement une surface comprise entre les tringles méridiennes et deux plans parallèles au plan équatorial du pneumatique, à égale distance dudit plan équatorial et plus proches dudit plan que les plans contenant les tringles circonférentielles. Les deux plans cités ci-dessus seront avantageusement les deux plans définissant la largeur axiale de la ou des couches de renforcement de la bande de roulement.

L'armature de carcasse peut être formée de deux nappes dont les fils ou câbles sont croisés d'une nappe à la suivante, en formant un angle au plus égal à 45° par rapport au plan équatorial du pneumatique, et dans le plan méridien séparant circonférentiellement un secteur en deux parties identiques. Elle est avantageusement formée d'une nappe unique dont les fils ou câbles sont alors contenus dans des plans perpendiculaires aux deux tringles méridiennes du secteur. Les fils ou câbles constituant cette armature sont retournés autour des tringles meridiennes de manière à former préférentiellement un retournement à hauteur constante.

Les secteurs de pneumatique ainsi renforcés, peuvent être gonflables individuellement à l'aide de chambres à air individuelles et appropriées, en nombre égal à celui des secteurs, ou alors gonflables dans leur ensemble, avec ou sans chambre à air ; dans ce dernier cas nous sommes en présence d'un ensemble de secteurs dit "sans chambre", chaque secteur étant alors recouvert intérieurement d'une couche de vulcanisat présentant la propriété d'être imperméable au gaz de gonflage du pneumatique.

Dans le cas de l'ensemble des secteurs gonflé à la pression de service au moyen d'une chambre à air unique, cette dernière peut être, de manière simple, torique, ou alors une chambre bridée méridiennement par un renfort, sous forme de fil, câble, tringle ou nappe étroite à plusieurs endroits équidistants circonférentiellement. Une telle chambre à air unique peut être continue circonférentiellement, mais elle peut être aussi discontinue, c'est-à-dire comportant deux extrémités fermées.

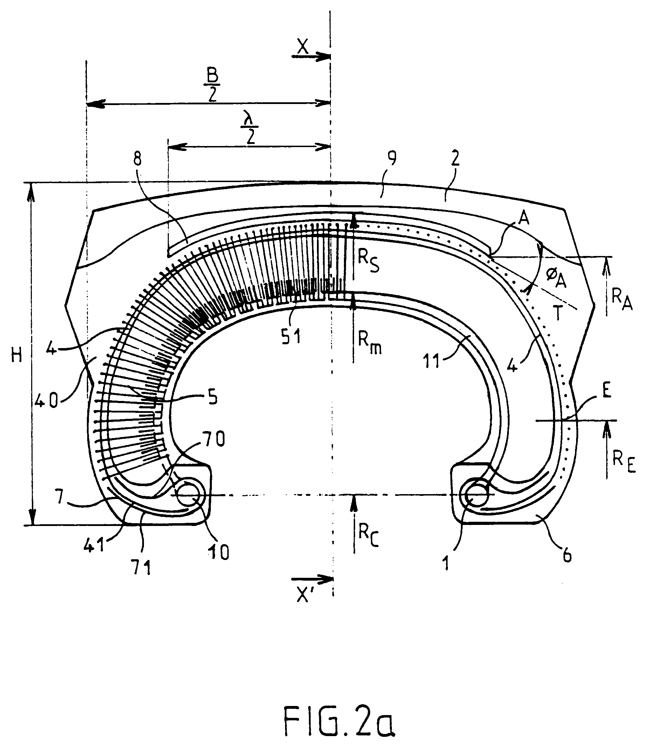

Si l'on appelle (fig 2a) Rs la distance séparant l'axe de rotation du pneumatique formé par les secteurs du point de l'armature de renfort d'un secteur le plus éloigné dudit axe, et Rm la distance séparant le même axe de rotation du point d'une tringle méridienne le plus éloigné dudit axe, la différence Rs - Rm sera préférentiellement comprise entre 0,1 (Rs - Rc) et 0,5 (Rs - Rc), dans le cas de l'utilisation pour le gonflage à la pression de service d'une chambre à air, et au moins égale à 0,2 (Rs - Rc) dans le cas où l'ensemble des secteurs est gonflé sans chambre à air, Rc étant le rayon des tringles circonférentielles du secteur. Ces variantes permettent avantageusement une bonne continuité de roulement des secteurs en évitant toute dégradation des chambres à air individuelles dans le premier cas, en permettant l'étanchéité des secteurs dans le deuxième cas, les tringles méridiennes en regard de deux secteurs adjacents étant jointives aux épaisseurs de gomme près. Dans le cas de l'ensemble gonflable sans chambre à air, les flancs méridiens, respectivement des deux secteurs adjacents sont en contact, à la jonction des deux secteurs, sur une hauteur (h), importante, égale à au moins 0,3 (Rs - Rc), cette hauteur (h), mesurée perpendiculairement à la portion méridienne de tringle, étant sensiblement constante sur les flancs méridiens des secteurs.

Les tringles méridiennes sont avantageusement inextensibles sous effort de tension, et présentent une faible rigidité de flexion dans leurs plans, c'est-à-dire en présence d'un moment de flexion exercé dans leurs plans.

Cette faible rigidité permet des changements de courbure des tringles méridiennes de tringles sans générer des contraintes internes d'extension et de compression néfastes pour lesdites tringles, qui seront avantageusement formées d'un assemblage de fils ou câbles tressés entre eux ou obtenu par enroulement d'un fil ou câble pour former plusieurs spires. Quant aux tringles circonférentielles elles sont de préférence inextensibles et présentent une grande rigidité à la flexion. Ces tringles circonférentielles peuvent être formées de tiges, de tubes ou de rubans d'acier, avec des extrémités circonférentielles courbes ou retournées sur elles-mêmes.

Deux tringles méridiennes et deux tringles circonférentielles peuvent former une seule tringle unique. Une telle tringle est alors obtenue, par exemple, par le tressage de fils ou câbles sur les portions de tubes, tiges ou rubans pour former les parties circonférentielles et le tressage seul pour former les parties méridiennes. Elle peut aussi être obtenue par l'assemblage de plusieurs spires de fils ou câbles et le passage à l'intérieur des portions de tube, ou l'assemblage avec les tiges ou rubans circonférentiels et serrage par colliers.

De manière préférentielle les tringles circonférentielles seront liées à la jante de montage de façon solide par des moyens appropriés, autres que la jante et les bourrelets.

Afin que la jonction entre deux secteurs adjacents offre une bonne résistance à la pénétration de cailloux ou objets divers et aux conséquences de cette pénétration afin de favoriser l'étanchéité de l'ensemble, il est avantageux que les flancs respectivement de deux secteurs adjacents qui se font face soient pourvus, pour l'un, d'une rainure présentant sur ledit flanc soit un tracé courbe continu soit préférentiellement un tracé ondulé, et pour l'autre de la saillie correspondante de manière à ce que cette dernière s'emboîte dans la rainure du flanc qui fait face.

La jonction, la cohésion entre deux secteurs adjacents peut être avantageusement améliorée en posant sur la face méridienne de l'un des secteurs adjacents une couche de mélange caoutchouteux autovulcanisant, c'est-à-dire vulcanisable à température ambiante, de faible épaisseur au moins égale à 2 mm. Afin de pouvoir plus aisément séparer un secteur de son voisin immédiat, cette couche sera avantageusement renforcée par un fil d'acier disposé en spirale dans le plan de la couche avec une extrémité visible, ce qui permet par traction dudit fil de déchirer la couche de mélange intersecteur, selon le principe décrit dans la demande française FR-A-2 676 679.

La couche de mélange caoutchouteux ainsi utilisée peut recouvrir toute la face méridienne du secteur, ou recouvrir seulement une partie de cette face et en particulier la face méridienne, soit de la saillie, soit de la rainure présente sur le flanc d'un secteur.

Les secteurs ainsi réalisés sont montés sur une jante unique monobloc. Afin de faciliter les manipulations des secteurs, et en particulier de faciliter leur montage et démontage, la jante de montage a des rebords de jante s'étendant soit radialement vers l'intérieur en direction de l'axe de rotation, soit radialement vers l'extérieur. Dans le premier cas, les rebords sont rendus discontinus circonférentiellement par la présence d'évidements, ceux-ci permettant la mise en place des bourrelets constitués autour des tringles circonférentielles, tringles se mettant en place axialement à l'intérieur des rebords de jante.

De préférence et de manière connue, les rebords de jante ont des contours extérieurs arrondis de manière à ce que l'armature de carcasse et les nappes additionnelles viennent se poser sur les rebords sans création de concentration de contraintes.

Dans le deuxième cas, c'est-à-dire le cas d'utilisation d'une jante à rebords tournés radialement vers l'extérieur, deux options peuvent se présenter. La première concerne l'utilisation d'une jante répondant aux normes admises avec des rebords, dont les sommets arrondis en général sont axialement à l'extérieur des parois verticales des rebords. Le montage des bourrelets circonférentiels d'un secteur se fait alors par fixation solide. La deuxième option concerne l'utilisation d'une jante avec des rebords comportant des sommets dont les extrémités sont tournées axialement vers l'intérieur, ces sommets formant ainsi avec les sièges de jante des rainures d'emboîtage, de montage des bourrelets de forme adaptée de chaque secteur.

Les caractéristiques, avantages et les modes d'éxécution de la présente invention ressortiront plus clairement de la description donnée ci-après prise en référence au dessin annexé sur lequel :

- la figure 1 représente l'ensemble roulant formé de secteurs pneumatiques monté sur jante,
- la figure 2a représente, vu en section selon la ligne YY de la figure 1, un des secteurs formant le pneumatique, avec des bourrelets armés d'une tringle unique.
- La figure 2b représente, vu en section selon la ligne XX de la figure 2a un des secteurs du pneumatique non monté sur jante.
- La figure 3a représente, vus en section selon la ligne YY de la figure 1 des secteurs formant le pneumatique avec des portions circonférentielles de tringle sous forme de "cavaliers", permettant une attache solide à la jante.
- la figure 3b représente, vu en section selon la ligne XX de la figure 3a un des secteurs pneumatiques non monté sur jante.
- la figure 4 représente une variante de bourrelet d'un secteur (3), monté sur une jante dont les rebords ont des arrondis axialement à l'intérieur.
- la figure 5a représente, vus dans le plan équatorial du pneumatique deux secteurs circonférentiellement adjacents, avec des flancs à rainures et saillies.
- la figure 5b représente la même variante, vue sur un flanc de secteur.
- la figure 6 représente une jante de montage destinée à recevoir l'ensemble des secteurs selon les figures 2a et 2b.
- la figure 7a représente très schématiquement un tambour de confection destiné à la fabrication d'un secteur.
- la figure 7b est une vue de la figure 7a selon le plan de coupe AA.
- la figure 8 représente une chambre à air individuelle destinée à être placée à l'intérieur de chaque section.

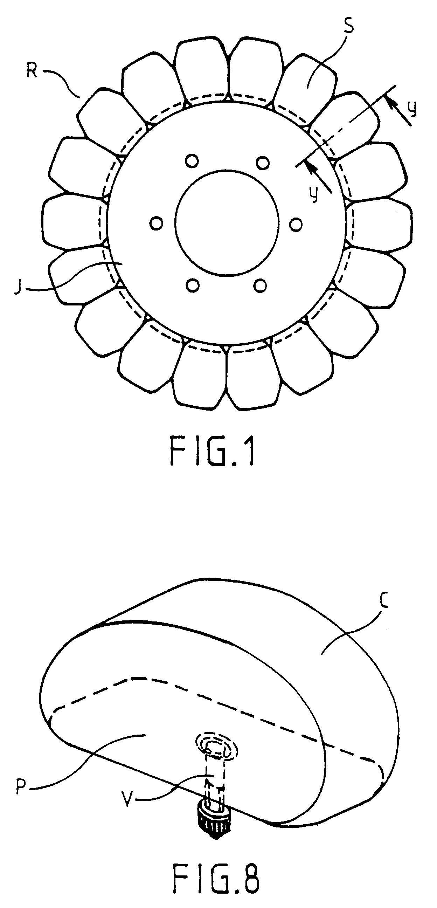

Sur la figure 1, est montrée une roue (R) munie d'une jante (J) sur laquelle sont montés 18 secteurs (S) circonférentiellement adjacents pour former un pneumatique de dimension 18.OO R 33, pneumatique usuellement employé pour le roulage de camions de Génie Civil. Ces secteurs (S) sont indépendants les uns des autres, gonflables séparèment, le nombre de chambres à air étant égal au nombre de secteurs, montables et démontables individuellement.

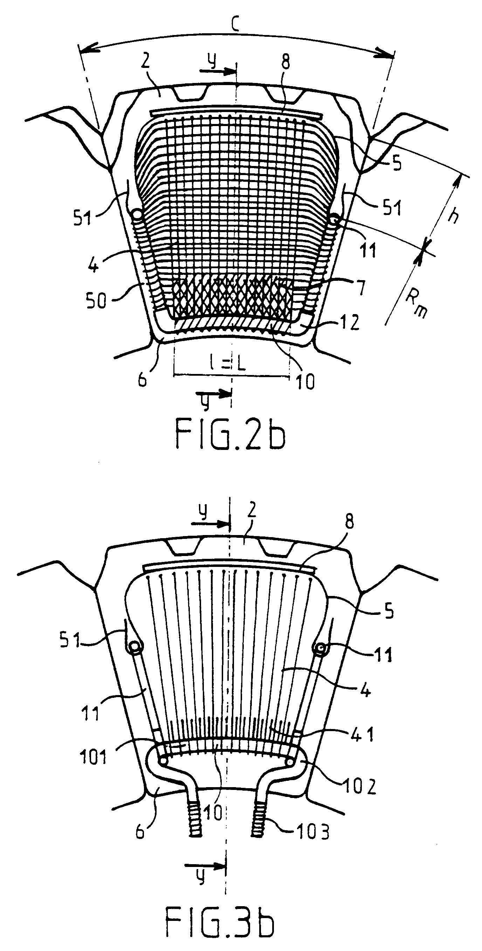

Dans une première variante de l'invention, chaque secteur (S) (figure 2a et 2b), de hauteur sur jante (H), de largeur méridienne (B), de longueur circonférentielle (C), comprend une tringle unique (1), résultante de la jonction de deux tringles circonférentielles (10) et de deux tringles méridiennes (11). Les tringles circonférentielles (10) sont constituées de tubes d'acier coudés à leurs extrémités (12) dans lesquels sont disposés plusieurs fils d'acier, chaque fil étant enrobé d'une couche de vulcanisat, cet assemblage étant dit "paquet".

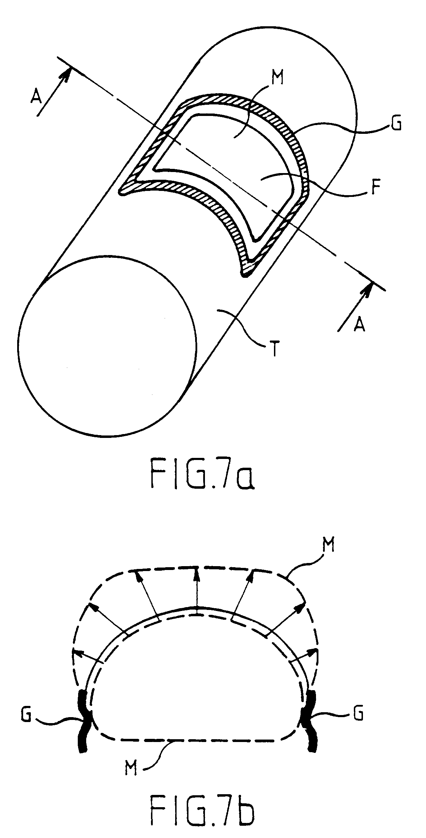

Les tubes d'acier ont une longueur circonférentielle (l) au plus égale à la distance circonférentielle (l') séparant les deux parois respectives des évidements (33) réalisés dans la jante (J) pour le montage des secteurs S (figure 6). Les fils d'acier sont prolongés pour former les tringles méridiennes (11), moins rigides que les parties circonférentielles.

Les tringles méridiennes (11) de la tringle (1) servent à l'ancrage d'une nappe (5) de câbles textiles en rayonne inextensibles. Ces câbles sont dans des plans perpendiculaires aux deux parties méridiennes (11) de la tringle (1).

L'ancrage de la nappe (5) se réalise par enroulement de ladite nappe autour des portions (11) en formant les retournements (51). Radialement intérieure à la nappe (5) se trouve la nappe de renfort (4) de câbles acier inextensibles présentant sous un effort égal à 10 % de la charge de rupture un allongement relatif au plus égal à 0,2 %. Cette nappe (4) a une largeur (L), mesurée au niveau des portions (10) de la tringle (1) égale à 131,7 mm et à (l). La variante décrite montre des bords (41) de la nappe (4) qui ne sont pas retournés autour des portions circonférentielles (10), mais sont ancrés par adhésion à l'aide de la nappe additionnelle (7), en câbles métalliques, enroulées autour des portions (10), de manière à présenter deux retournements (70) et (71), entre lesquels sont insérés les bords (41) de la nappe (4). Les câbles métalliques de la nappe (7) sont inclinés d'un angle de 45° par rapport à la direction circonférentielle du pneumatique formé par les secteurs (S).

Une armature de renforcement ou de sommet (8), composée de deux nappes de câbles métalliques inextensibles, c'est-à-dire présentant sous 10 % de leur charge de rupture un allongement au plus égal à 0,2 %, et d'une plaque d'acier uniforme d'épaisseur de 2 mm, complète l'ensemble des renforts. Les câbles métalliques font avec la direction circonférentielle des angles de 45° et sont enrobés d'un mélange de calandrage à fort module d'élasticité d'extension. Cette armature de renforcement (8) présente une rigidité à la flexion méridienne égale à 420 daN par mm de longueur circonférentielle.

L'ensemble des armatures (4, 5, 7, 8) est recouvert d'une bande de roulement (2) comportant des rainures (9), de gomme de flancs (40) et (50), de gomme protectrice des bourrelets (6).

Sur la partie droite de la figure 2a, simplifiée, au point (A) d'intersection entre le profil méridien de l'armature de renforcement (8) de largeur axiale λ, et de l'armature de renfort (4), la tangente (T) audit profil méridien de l'armature (4) fait avec une parallèle à l'axe de rotation de l'ensemble passant par A un angle ($\varnothing_A$) tel que

$$\frac{R_A^2 - R_E^2}{2R_A} \operatorname{tg} \varnothing = \lambda \, ,$$

$R_A$ et $R_E$ étant respectivement, comme montré sur la figure 2a, les rayons du point (A) et du point (E) de l'armature de renfort (4) le plus éloigné axialement de la trace du plan équatorial (XX').

La jante (J) de montage des secteurs (S) de la première variante tels que décrits ci-dessus et montrés sur les fig 2a et 2b , comprend schématiquement (fig 6) un disque (D), un fond de jante (30), des sièges (31) et des rebords (32), ces rebords (32) ayant la particularité d'être discontinus circonférentiellement. Les évidements (33) ont les dimensions suivantes : la profondeur (a) est égale à la largeur axiale du rebord de jante et à 50 mm, soit sensiblement 0,06 d , d étant le diamètre du siège de jante ; la largeur circonférentielle (b) est égale à 28 mm, soit sensiblement 0,035 d ; la hauteur (h) d'un rebord de jante est égale à 50 mm.

Par comparaison à un ensemble formé du pneumatique et d'une jante à rebords dirigés vers l'axe de rotation du pneumatique, nous pouvons énoncer que nous sommes en présence d'un secteur à accrochage inversé, les bourrelets circonférentiels du secteur (S) renforcés par les tringles (10) venant se poser sur les sièges (31) de la jante (J) radialement par l'intérieur.

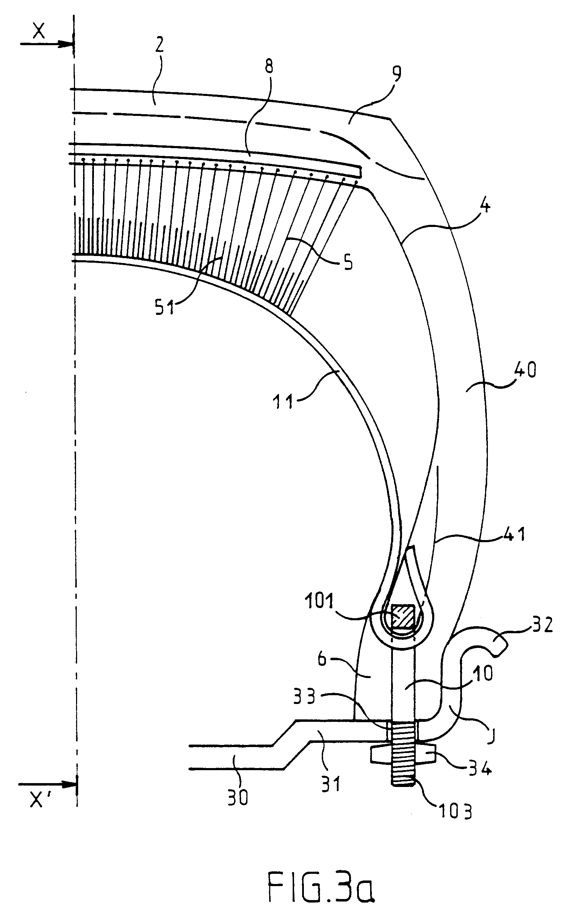

Le secteur pneumatique (S) représenté sur les figures 3a et 3b ne diffère fondamentalement de celui représenté sur les figures 2a et 2b que par la constitution des tringles renforçant les bourrelets du secteur.Les tringles circonférentielles (10) sont constituées de rubans (101) ou tubes d'acier laitonnés, retournés sur eux-mêmes radialement à l'intérieur, les retournements (102) étant eux-mêmes coudés de manière à ce que les rubans se terminent par des parties droites (103) cylindriques. Ces parties (103) sont filetées et permettent la fixation solide sur la jante de montage des secteurs (S), par le moyen d'écrous (34).

Quant à la jante (J) destinée à recevoir les secteurs (S) de la seconde variante tels que décrits ci-dessus et montres sur les figures 3a et 3b , ses rebords (32) sont radialement à l'extérieur du fond de jante (30) et des sièges (31), (figure 3a), c'est-à-dire comme pour une jante normale.Les sièges (31) sont cependant percés d'orifices (33) destinés au passage des tiges filetées (103) correspondant aux tringles circonférentielles (10) ou "cavaliers". Les écrous (34) permettent la fixation solide, tout en étant simple.

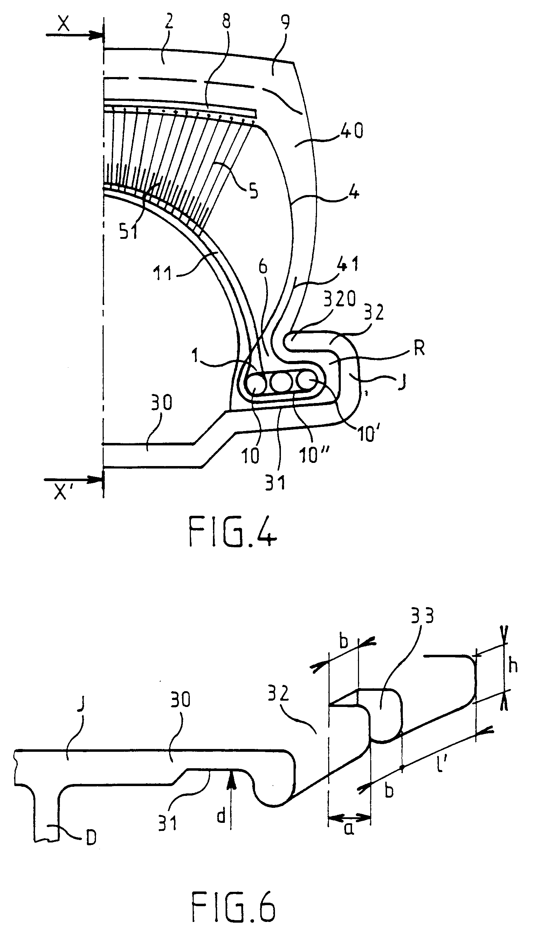

La troisième variante, montrée sur la figure 4, diffère des précédentes par le système d'accrochage à la jante (J) et par la jante (J) elle-même. Le système d'accrochage comprend une tringle (1) comprenant les parties circonférentielles (10) et les parties méridiennes (11). Aux parties circonférentielles (10) sont adjointes deux portions de tringles (10') circulaires et maintenues fixées aux parties circonférentielles (10) par des colliers (10"). Autour de ce système est retournée l'armature de renfort (4) pour former des retournements (41). Un tel système d'accrochage permet l'emboîtage des bourrelets (6) dans la rainure d'accrochage (R) de la jante (J) formée d'une part par les sièges (31) de jante et les rebords arrondis (32) axialement vers l'intérieur, c'est-à-dire vers l'axe (XX').

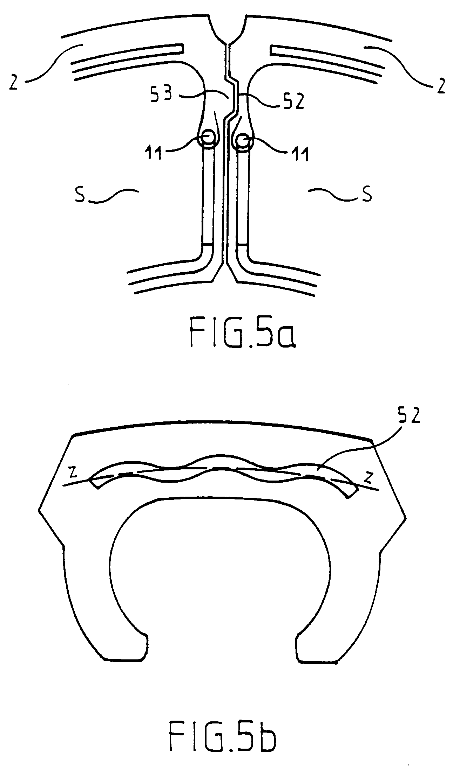

Sur la figure 5a, on voit les deux flancs (50), de deux secteurs (S) adjacents, qui se font face. L'un est muni d'une rainure (52), dont le tracé, vue sur le flanc (figure 5b) est une sinusoïde dont l'axe moyen (ZZ) est curviligne. L'autre est pourvu d'une saillie (53), présentant le même tracé sur le flanc que la rainure (52) sur le flanc qui fait face, et dont les dimensions sont telles que ladite saillie (53) s'emboîte parfaitement et sans effort dans la rainure (52). Bien que les rainure et saillie ne soient représentées que dans la partie supérieure des flancs intersecteurs, il est évident que rainure et saillie peuvent être prolongées dans les parties latérales de ces flancs.

La figure 7a montre, très schématiquement un tambour de confection (T) destiné à la fabrication d'un secteur (S) muni d'une tringle unique (1). Ce tambour cylindrique a la particularité d'être muni de gorges (G), destinées à la pose et au serrage des tringles (1) sur le tambour, non circulaire mais ayant une configuration adaptée à celle de la tringle (1) du secteur (S). Ces gorges (G) entourent une fenêtre (F), à l'intérieur de laquelle se trouve une membrane (M) déformable (figure 7b). Cette membrane (M) peut être renforcée en elle-même de manière à conférer sous l'effet de la pression de galbage la configuration désirée à l'armature de renfort, éventuellement l'armature de carcasse posée initialement sur le tambour (T). La membrane (M) peut aussi être déformée par l'action combinée de la pression de galbage et d'un support métallique situé radialement à l'intérieur de la membrane.

Le procédé pour fabriquer un secteur de pneumatique, donné à titre d'exemple, consiste à poser sur le tambour de confection, sommairement décrit ci-dessus, les gommes de protecteur de bourrelet, les nappes additionnelles éventuelles (7), l'armature éventuelle de câbles (5), les gommes de bourrage nécessaires, puis à galber l'ensemble ainsi constitué. L'armature de câbles radiaux (4) est alors posée avant le retournement autour des tringles (1) des nappes additionnelles (7). Le secteur est ensuite achevé par la pose des gommes de flanc, de la ou des couches de renforcement (8) de la bande de roulement (9). L'ébauche crue ainsi réalisée est ensuite vulcanisée dans un moule de cuisson de forme adaptée.

Une deuxième technique possible de fabrication d'un secteur (S) consiste à utiliser un noyau dur, muni ou non d'espaceurs, sur lequel on dispose les éléments de renforcement de la nappe de renfort (4) et les éléments de renforcement de l'armature de carcasse (5), les nappes ou armature étant munies de leurs tringles respectives. Ce noyau est placé dans un moule adapté, dont la fermeture permet l'injection de matière caoutchouteuse.

Quant aux chambres à air (C) nécessaires pour le gonflage des secteurs formant le pneumatique, lorsque ceux-çi ne sont pas munis intérieurement d'une couche de vulcanisat présentant la propriété d'être imperméable à l'air de gonflage, leur forme (figure 8) est pratiquement équivalente à la forme intérieure d'un secteur (S). Elles sont munies d'une valve (V) sur leur face plane (P) destinée à rentrer en contact avec la jante (J) de montage. Ces chambres sont fabriquées par rotomoulage c'est-à-dire en répartissant, par rotation simultanée selon trois axes, à l'intérieur d'un moule creux, un élastomère par exemple du polyuréthane à haute température pour effectuer la vulcanisation.

## Revendications

1. Pneumatique constitué de plusieurs secteurs pneumatiques (S) gonflables et amovibles, circonférentiellement adjacents lorsqu'ils sont montés sur une jante adaptée (J) à base circulairement continue, chaque secteur (S) comprenant une bande de roulement (2) réunie à quatre flancs (40, 50), deux de ces flancs (50) étant circonférentiellement adjacents aux flancs (50) des secteurs (S) voisins et les deux autres (40) formant les flancs du pneumatique, caractérisé en ce que les flancs (40, 50) se terminent respectivement par des bourrelets méridiens non en contact avec la jante de montage (J) et renforcés par des tringles méridiennes (11), et par des bourrelets circonférentiels assurant le montage des secteurs (S) sur la jante (J) et renforcés par des tringles circonférentielles (10) liées aux tringles méridiennes (11) et auxquelles au moins une armature de renfort (4) de fils ou câbles inextensibles est ancrée, cette armature (4) étant radialement juxtaposée à au moins une armature de renforcement (8) de bande de roulement (2).

2. Pneumatique selon la revendication 1, caractérisé en ce que l'armature de renfort (4) est composée d'au moins une nappe de fils ou câbles radiaux.

3. Pneumatique selon la revendication 1, caractérisé en ce que l'armature de renfort (4) est composée d'au moins deux nappes de fils ou câbles, parallèles entre eux dans chaque nappe, et croisés d'une nappe à la suivante.

4. Pneumatique selon la revendication 1, caractérisé en ce que, le secteur (S) étant monté sur jante et gonflé à sa pression de service, le profil méridien de l'armature de renfort (4) présente, en ses points d'intersection (A) avec le profil méridien de l'armature de renforcement (8) de la bande de roulement (2), points qui correspondent aux extrémités axiales de ladite armature (8), des tangentes faisant avec l'axe de rotaiton du pneumatique des angles ($\varnothing_A$) tel que

$$\frac{R_A{}^2 - R_E{}^2}{2R_A} \, tg \, \varnothing = \lambda \, ,$$

$R_A$ étant le rayon des points (A), mesuré par rapport à l'axe de rotation,

$R_E$ étant le rayon des points (E) du profil méridien de l'armature de renfort (4) les plus éloignés axialement du plan équatorial (XX'), $\lambda$ étant la largeur de l'armature (8) du renforcmeent, armature qui est dotée d'une rigidité méridienne de flexion élevée.

5. Pneumatique selon l'une des revendications 1 à 4, caractérisé en ce qu'aux tringles méridiennes (11) sont ancrés les deux bords (51) d'une armature de carcasse formée d'au moins une nappe (5) de fils ou câbles inextensibles, contenus dans des plans perpendiculaires aux deux tringles méridiennes (11).

6. Pneumatique selon l'une des revendication 1 à 4, caractérisé en ce qu'autour des tringles méridiennes (11) sont retournés les bords (51) d'une armature de carcasse formée de deux nappes (5) de fils ou câbles inextensibles, croisés d'une nappe à la suivante en formant un angle au plus égal à 45° par rapport au plan équatorial du pneumatique.

7. Pneumatique selon l'une des revendications 5 à 6, caractérisé en ce que l'armature de carcasse (5) couvre uniquement une surface comprise entre les deux tringles méridiennes (11) et deux plans parallèles au plan équatorial et définissant la largeur axiale de l'armature de renforcement (8) de la bande de roulement (2).

8. Pneumatique selon l'une des revendications 5 à 7, caractérisé en ce que les retournements (51) de l'armature de carcasse (5) ont méridiennement une hauteur constante.

9. Pneumatique selon l'une des revendications 5 à 8, caractérisé en ce que l'armature de carcasse (5) est située, dans le sommet des secteurs, radialement à l'extérieur de la ou des nappes de renfort (4).

10. Pneumatique selon l'une des revendications 1 à 9, caractérisé en ce que les tringles méridiennes (11) sont inextensibles sous effort de tension, ont une faible rigidité de flexion dans leurs plans et sont formées d'un assemblage de fils ou câbles tressés entre eux ou d'un assemblage obtenu par enroulement d'un fil ou câble pour former plusieurs spires.

11. Pneumatique selon l'une des revendications 1 à 9, caractérisé en ce que les tringles circonférentielles (10) présentent une grande rigidité de flexion, et sont formées de tiges, tubes ou rubans d'acier.

12. Pneumatique selon l'une des revendications 1 à 11, caractérisé en ce que dans chaque secteur (S) les tringles méridiennes (11) et les tringles circonférentielles (10) de tringle sont une unique tringle (1).

**13.** Pneumatique selon l'une des revendications 1 à 9, caractérisé en ce que chaque tringle circonférentielle (10) est un tube creux, une tige ou un ruban d'acier (101) retourné sur lui-même radialement à l'intérieur pour former deux retournements (102) eux mêmes coudés perpendiculairement pour former deux portions cylindriques (103) filetées.

**14.** Pneumatique selon l'une des revendications 1 à 13, caractérisé en ce que chaque secteur (S) est muni intérieurement d'un vulcanisat imperméable à l'air de gonflage ce qui permet l'utilisation du pneumatique sans chambre à air.

**15.** Pneumatique selon l'une des revendications 1 à 13, caractérisé en ce que les secteurs circonférentiellement adjacents (S) sont gonflés à leur pression de service par une unique chambre à air.

**16.** Pneumatique selon la revendication 1 à 13, caractérisé en ce que chaque secteur (S) est gonflé à sa pression de service à l'aide d'une chambre à air individuelle (C) de forme adaptée.

**17.** Pneumatique selon la revendication 14, caractérisé en ce que, au niveau du plan équatorial du pneumatique formé par les secteurs (S), la différence entre la distance (Rs) séparant l'axe de rotation du pneumatique du point de l'armature de renfort (4) la plus éloignée dudit axe et la distance (Rm) séparant le même axe du point de la tringle méridienne (11) le plus éloigné dudit axe, est au moins égale à 0,2 (Rs - Rc), Rc étant le rayon des portions circonférentielles (10) de tringle, les flancs méridiens, respectivement de deux secteurs adjacents, étant en contact sur une hauteur (h), égale à au moins à 0,3 (Rs - Rc) .

**18.** Pneumatique selon l'une des revendications 15 ou 16, caractérisé en ce que, au niveau du plan équatorial du pneumatique formé par les secteurs (S), la différence entre la distance (Rs) séparant l'axe de rotation du pneumatique du point de l'armature de renfort (4) la plus éloigné dudit axe et la distance (Rm) séparant le même axe du point de tringle méridienne (11) le plus éloigné dudit axe, est compris entre 0,2(Rs - Rc) et 0,5 (Rs - Rc), Rc étant le rayon des portions circonférentielles (10) de tringle .

**19.** Pneumatique selon l'une des revendications 1 à 18, caractérisé en ce que les flancs, repectivement de deux secteurs (S) circonférentiellement adjacents, qui se font face, soient pourvus l'une d'une rainure (52), l'autre d'une saillie (53) correspondante pouvant s'emboîter dans ladite rainure (52).

**20.** Pneumatique selon la revendication 19, caractérisé en ce que la rainure (52) et la saillie (53) ont des tracés curvilignes.

**21.** Pneumatique selon la revendication 19, caractérisé en ce que la rainure (52) et la saillie (53) ont des tracés ondulés ou en zigzag, les axes moyens de ces tracés étant curvilignes.

**22.** Pneumatique selon l'une des revendications 1 à 21, caractérisé en ce que l'un des flancs de chaque secteur est muni d'une couche de mélange caoutchouteux autovulcanisant de faible épaisseur, renforcée par un fil d'acier disposé en spirale dans le plan de la couche et présentant une extrémité visible.

**23.** Ensemble formé d'un pneumatique à secteurs (S) selon l'une des revendications 1 à 12 et d'une jante (J) caractérisé en ce que la jante (J) est munie d'un fond de jante (30), de rebords (32) tournés radialement vers l'intérieur et rendus discontinus circonférentiellement par des évidements (33) et en ce que chaque secteur (S) est muni des bourrelets circonférentiels (6) prenant appui sur les sièges (31) de jante (J) radialement par l'intérieur.

**24.** Ensemble formé d'un pneumatique à secteurs (S) selon l'une des revendications 1 à 12 et d'une jante (J) caractérisé en ce que la jante (J) est munie d'un fond de jante (30) de rebords (32), dont les sommets ont des extrémités (320) tournées axialement vers l'intérieur formant aussi avec les sièges de jante (31) des rainures (R) dites d'emboîtage, et en ce que chaque secteur (S) est muni de bourrelets circonférentiels (6) de formes adaptées pour s'emboîter dans les rainures (R).

**25.** Ensemble formé d'un pneumatique à secteurs (S) selon la revendication 13 et d'une jante (J), caractérisé en ce que la jante (J) est munie d'un fond de jante (30), de rebords (32) tournés radialement vers l'extérieur avec des sommets (320) axialement vers l'extérieur, et des sièges (31) percés d'orifices (33) destinés au passage des tiges filetées (103) des tringles circonférentielles( (10) de chaque secteur (S) permettant ainsi la fixation solide des bourrelets à la jante (J) au moyen d'écrous (34).

**Claims**

**1.** A tyre formed of several inflatable, removable pneumatic sectors (S) which are circumferentially adjacent when mounted on a suitable rim (J) with circularly continuous base, each sector (S) comprising a tread (2) connected to four sidewalls (40, 50), two of these sidewalls (50) being circumferentially adjacent to the sidewalls (50) of the neighbouring sectors (S) and the other two (40) forming the sidewalls of the tyre, characterised in that the sidewalls (40, 50) terminate respectively in meridian beads not connected to the mounting rim (J) and reinforced by meridian bead wires (11), and by circumferential beads which ensure the mounting of the sectors (S) on the rim (J) and are reinforced by circumferential bead wires (10) connected to the meridian bead wires (11) and to which at least one reinforcing armature (4) of inextensible cords or cables is anchored, this armature (4) being radially adjacent to at least one reinforcement armature (8) of the tread (2).

2. A tyre according to Claim 1, characterised in that the reinforcing armature (4) is formed of at least one ply of radial cords or cables.

3. A tyre according to Claim 1, characterised in that the reinforcing armature (4) is formed of at least two plies of cords or cables parallel to each other in each ply and crossed from one ply to the next.

4. A tyre according to Claim 1, characterised in that, the sector (S) being mounted on a rim and inflated to its operating pressure, the meridian profile of the reinforcing armature (4) has, at its points of intersection (A) with the meridian profile of the reinforcement armature (8) of the tread (2), points which correspond to the axial ends of said armature (8), tangents forming with the axis of rotation of the tyre angles ($\varnothing$A) such that

$$\frac{R_A{}^2 - R_E{}^2}{2R_A} \tan \varnothing = \lambda$$

$R_A$ being the radius of the points (A) measured with respect to the axis of rotation,
$R_E$ being the radius of the points (E) of the meridian profile of the reinforcing armature (4) which are furthest axially from the equatorial plane (XX'), $\lambda$ being the width of the armature (8) of the reinforcement, which armature has a high meridian stiffness in flexure.

5. A tyre according to one of Claims 1 to 4, characterised in that the two edges (51) of a carcass reinforcement formed of at least one ply (5) of inextensible cords or cables, contained in planes perpendicular to the two meridian bead wires (11), are anchored to the meridian bead wires (11).

6. A tyre according to one of Claims 1 to 4, characterised in that around the meridian bead wires (11) there are turned upward the edges (51) of a carcass reinforcement formed of two plies (5) of inextensible cords or cables, crossed from one ply to the next, forming an angle at most equal to 45° with respect to the equatorial plane of the tyre.

7. A tyre according to one of Claims 5 and 6, characterised in that the carcass reinforcement (5) covers only a surface contained between the two meridian bead wires (11) and two planes parallel to the equatorial plane and defining the axial width of the reinforcement armature (8) of the tread (2).

8. A tyre according to one of Claims 5 to 7, characterised in that the turn-ups (51) of the carcass reinforcement (5) have a constant height meridianly.

9. A tyre according to one of Claims 5 to 8, characterised in that the carcass reinforcement (5) is located, in the top of the sectors, radially to the outside of the reinforcing ply or plies (4).

10. A tyre according to one of Claims 1 to 9, characterised in that the meridian bead wires (11) are inextensible under the force of tension, have a low stiffness in flexure in their planes and are formed of an assembly of cords or cables braided to each other or of an assembly obtained by winding a cord or cable in order to form a plurality of turns.

11. A tyre according to one of Claims 1 to 9, characterised in that the circumferential bead wires (10) are of great stiffness in flexure and are formed of rods, tubes or bands of steel.

12. A tyre according to one of Claims 1 to 11, characterised in that, in each sector (S), the meridian bead wires (11) and the circumferential bead wires (10) of the bead wire are a single bead wire (1).

13. A tyre according to one of Claims 1 to 9, characterised in that each circumferential bead wire (10) is a hollow tube, a rod or a band of steel (101) turned up on itself radially to the inside in order to form two turn-ups (102) themselves bent perpendicularly to form two threaded cylindrical portions (103).

14. A tyre according to one of Claims 1 to 13, characterised in that each sector (S) is provided on the inside with a vulcanised rubber which is impermeable to the inflation air, which permits the use of the tyre without inner tube.

15. A tyre according to one of Claims 1 to 13, characterised in that the circumferentially adjacent sectors (S) are inflated to their operating pressure by a single inner tube.

16. A tyre according to Claims 1 to 13, characterised in that each sector (S) is inflated to its operating pressure by means of an individual inner tube (C) of appropriate shape.

17. A tyre according to Claim 14, characterised in that, at the level of the equatorial plane of the tyre formed by the sectors (S), the difference between the distance (Rs) between the axis of rotation of the tyre and the point of the reinforcing armature (4) furthest from said axis, and the distance (Rm) between said axis and the point of the meridian bead wire (11) furthest from said axis is at least equal to 0.2(Rs - Rc), Rc being the radius of the circumferential portions (10) of the bead wire, the meridian sidewalls respectively of two adjacent sectors being in contact over a height (h) equal to at least 0.3(Rs - Rc).

18. A tyre according to one of Claims 15 or 16, characterised in that, at the level of the equatorial plane of the tyre formed by the sectors (S), the difference between the distance (Rs) between the axis of rotation of the tyre and the point of the reinforcing armature (4) furthest from said axis and the distance (Rm) between said axis from the meridian bead wire point (11) furthest from said axis is between 0.2(Rs - Rc) and 0.5(Rs - Rc), Rc being the radius of the circumferential portions (10) of the bead wire.

19. A tyre according to one of Claims 1 to 18, characterised in that the sidewalls respectively of two circumferentially adjacent sectors (S) which face each other are provided in the one case with a groove (52) and in the other case with a corresponding protrusion (53) which can fit into said groove (52).

20. A tyre according to Claim 19, characterised in that the groove (52) and the protrusion (53) have curved traces.

21. A tyre according to Claim 19, characterised in that the groove (52) and the protrusion (53) have undulating or zigzag traces, the mean axes of these traces being curved.

22. A tyre according to one of Claims 1 to 21, characterised in that one of the sidewalls of each sector is provided with a layer of self-vulcanising rubber mix of slight thickness, reinforced by a steel wire arranged spirally in the plane of the layer and having a visible end.

23. An assembly formed of a tyre with sectors (S) according to one of Claims 1 to 12 and a rim (J), characterised in that the rim (J) is provided with a rim base (30) and flanges (32) turned radially towards the inside and made circumferentially discontinuous by recesses (33), and in that each sector (S) is provided with circumferential beads (6) which rest on the seats (31) of rim (J) radially on the inside.

24. An assembly formed of a tyre with sectors (S) according to one of Claims 1 to 12 and of a rim (J), characterised in that the rim (J) is provided with a rim base (30) and with flanges (32) the tips of which have ends (320) turned axially towards the inside, also forming with the rim seats (31) grooves (R) called nesting grooves, and in that each sector (S) is provided with circumferential beads (6) of shape appropriate to fit in the grooves (R).

25. An assembly formed of a tyre with sectors (S) according to Claim 13 and of a rim (J), characterised in that the rim (J) is provided with a rim base (30) and with flanges (32) turned radially towards the outside with tips (320) axially towards the outside, and with seats (31) pierced with orifices (33) intended for the passage of the threaded rods (103) of the circumferential bead wires (10) of each sector (S), thus permitting the firm attachment of the beads to the rim (J) by means of nuts (34).

**Patentansprüche**

1. Reifen, der aus mehreren pneumatischen Sektoren (S) gebildet ist, die aufpumpbar, entfernbar und in Umfangsrichtung nebeneinanderliegend sind, wenn sie auf einer geeigneten Felge (J) mit kreisförmig durchgehender Basis montiert sind, wobei jeder Sektor (S) eine Lauffläche (2) aufweist, die mit vier Seiten (40, 50) vereint ist, wobei zwei dieser Seiten (50) in Umfangsrichtung neben den Seiten (50) der benachbarten Sektoren (S) liegen und die anderen beiden (40) die Seiten des Reifens bilden, dadurch **gekennzeichnet**, daß die Seiten (40, 50) jeweils durch Meridianwülste beendet sind, die nicht in Berührung mit der Montagefelge (J) stehen und durch Meridiankerne (11) verstärkt sind, und durch Umfangswülste, die die Montage der Sektoren (S) auf der Felge (J) sicherstellen und durch Umfangskerne (10) verstärkt sind, die mit den Meridiankernen (11) verbunden sind und an denen mindestens ein Verstärkungsmantel (4) aus undehnbaren Drähten oder Seilen verankert ist, wobei dieser Mantel (4) radial neben mindestens einem Verstärkungsmantel (8) der Lauffläche (2) angeordnet ist.

2. Reifen nach Anspruch 1, dadurch **gekennzeichnet**, daß der Verstärkungsmantel (4) aus mindestens einer radialen Draht- oder Seileinlage gebildet ist.

3. Reifen nach Anspruch 1, dadurch **gekennzeichnet**, daß der Verstärkungsmantel (4) aus mindestens zwei Draht- oder Seileinlagen zusammengesetzt ist, die untereinander in jeder Einlage parallel laufen und von einer Einlage zur folgenden gekreuzt sind.

4. Reifen nach Anspruch 1, dadurch **gekennzeichnet**, daß, wenn der Sektor (S) auf der Felge montiert ist und auf seinen Betriebsdruck aufgepumpt ist, das Meridianprofil des Verstärkungsmantels (4) an seinen Schnittpunkten (A) mit dem Meridianprofil des Verstärkungsmantels (8) der Lauffläche (2), Punkten, die den axialen Enden des genannten Mantels (8) entsprechen, Tangenten aufweist, die mit der Drehachse des Reifens die folgenden Winkel ($\varnothing_A$) bilden:

$$\frac{R_A{}^2 - R_E{}^2}{2R_A} \, tg \, \varnothing = \lambda \, ,$$

wobei $R_A$ der Radius der Punkte (A) ist, in bezug auf die Drehachse gemessen, $R_E$ der Radius der Punkte (E) des Meridianprofils des Verstärkungsmantels (4) ist, die axial von der Äquatorialebene (XX') am weitesten entfernt sind, $\lambda$ die Breite des Verstärkungsmantelsmantels (8) ist, eines Mantels, der mit einer erhöhten Meridian-Biegesteifigkeit versehen ist.

5. Reifen nach einem der Ansprüche 1 bis 4, dadurch **gekennzeichnet**, daß an den Meridiankernen (11) die beiden Ränder (51) eines Karkassenmantels verankert sind, der aus mindestens einer Einlage (5) aus undehnbaren Drähten oder Seilen gebildet ist, die in Ebenen senkrecht zu den beiden Meridiankernen (11) enthalten sind.

6. Reifen nach einem der Ansprüche 1 bis 4, dadurch **gekennzeichnet**, daß rund um die Meridiankerne (11) die Ränder (51) eines Karkassenmantels herumgeschlagen sind, der aus zwei Einlagen (5) aus undehnbaren Drähten oder Seilen gebildet ist, die von der einen Einlage zur folgenden überkreuzt sind, wobei sie einen Winkel von mindestens gleich 45° in bezug auf die Äquatorialebene des Reifens bilden.

7. Reifen nach einem der Ansprüche 5 bis 6, dadurch **gekennzeichnet**, daß der Karkassenmantel (5) einheitlich eine Oberfläche abdeckt, die zwischen den beiden Meridiankernen (11) und zwei Ebenen gebildet ist, die parallel zur Äquatorialebene liegen und die axiale Breite des Verstärkungsmantels (8) der Lauffläche (2) festlegen.

8. Reifen nach einem der Ansprüche 5 bis 7, dadurch **gekennzeichnet**, daß die umgeschlagenen Teile (51) des Karkassenmantels (5) eine konstante Meridianhöhe aufweisen.

9. Reifen nach einem der Ansprüche 5 bis 8, dadurch **gekennzeichnet**, daß der Karkassenmantel (5) im Scheitel der Sektoren radial an der Außenseite der Verstärkungseinlage(n) (4) gelegen ist.

10. Reifen nach einem der Ansprüche 1 bis 9, dadurch **gekennzeichnet**, daß die Meridiankerne (11) unter Zugkraft undehnbar sind, in ihren Ebenen eine geringe Biegesteifigkeit aufweisen und aus einer Anordnung miteinander verflochtener Drähte oder Seile oder einer Anordnung gebildet sind, die durch Aufwickeln eines Drahtes oder Seiles zur Bildung mehrerer Schraubenwindungen gebildet ist.

11. Reifen nach einem der Ansprüche 1 bis 9, dadurch **gekennzeichnet**, daß die Umfangskerne (10) eine hohe Biegesteifigkeit aufweisen und aus Stahlstäben, Stahlrohren oder Stahlbändern gebildet sind.

12. Reifen nach einem der Ansprüche 1 bis 11, dadurch **gekennzeichnet**, daß in jedem Sektor (S) die Meridiankerne (11) und die Umfangskerne (10) des Kerns ein einziger Kern (1) sind.

13. Reifen nach einem der Ansprüche 1 bis 9, dadurch **gekennzeichnet**, daß jeder Umfangskern (10) ein hohles Stahlrohr, ein Stahlstab oder ein Stahlband (101) ist, das radial im Inneren auf sich selbst umgeschlagen ist, um zwei Wendestellen (102) bilden, die ihrerseits senkrecht abgeknickt sind, um zwei zylindrische, mit Gewinde versehene Abschnitte (103) zu bilden.

14. Reifen nach einem der Ansprüche 1 bis 13, dadurch **gekennzeichnet**, daß jeder Sektor (S) im Inneren mit einem für die Aufpumpluft undurchlässigen Vulkanisat versehen ist, das die Benutzung des Reifens ohne Luftkammer gestattet.

15. Reifen nach einem der Ansprüche 1 bis 13, dadurch **gekennzeichnet**, daß seine in Umfangsrichtung benachbarten Sektoren (S) auf ihren Betriebsdruck durch eine einzige Luftkammer aufgepumpt sind.

16. Reifen nach Anspruch 1 bis 13, dadurch **gekennzeichnet**, daß jeder Sektor (S) auf Seinen Betriebsdruck mit Hilfe einer individuellen Luftkammer (C) mit angepaßter Form aufgepumpt ist.

17. Reifen nach Anspruch 14, dadurch **gekennzeichnet**, daß auf Höhe der Äquatorialebene des Reifens, der durch die Sektoren (S) gebildet ist, die Differenz zwischen dem Abstand (Rs), der die Drehachse des Reifens von dem Punkt des Verstärkungsmantels (4) trennt, der von der genannten Achse am weitesten entfernt ist, und dem Abstand (Rm), der dieselbe von dem Punkt des Meridiankernes (11) trennt, der von der genannten Achse am weitestens entfernt ist, mindestens 0,2 (Rs - Rc) beträgt, wobei Rc der Radius der Umfangsabschnitte (10) des Kernes ist, wobei die Meridianseiten jeweils zweier benachbarter Sektoren auf einer Höhe (h) in Berührung stehen, die mindestens gleich 0,3 (Rs - Rc) ist.

18. Reifen nach einem der Ansprüche 15 oder 16, dadurch **gekennzeichnet**, daß in Höhe der Äquatorialebene des Reifens, der von den Sektoren (S) gebildet ist, die Differenz zwischen dem Abstand (Rs), der die Drehachse des Reifens von dem Punkt des Verstärkungsmantels (4) trennt, der am weitesten von der genanten Achse entfernt ist, und dem Abstand (Rm), der dieselbe Achse von dem Punkt des Meridiankernes (11) trennt, der von der genannten Achse am weitesten entfernt ist, zwischen 0,2 (Rs - Rc) und 0,5 (Rs - Rc) liegt, wobei Rc der Radius der Umfangsabschnitte (10) des Kernes ist.

19. Reifen nach einem der Ansprüche 1 bis 18, dadurch **gekennzeichnet**, daß die Seiten zweier in Umfangsrichtung benachbarter Sektoren (S), die einander zugewandt sind, jeweils die eine mit einer Rille (52) und die andere mit einem entsprechenden Vorsprung (53) versehen sind, der sich in die genannte Rille (52) einpassen kann.

20. Reifen nach Anspruch 19, dadurch **gekennzeichnet**, daß die Rille (52) und der Vorsprung (53) gekrümmte Verläufe aufweisen.

21. Reifen nach Anspruch 19, dadurch **gekennzeichnet**, daß die Rille (52) und der Vorsprung (53) gewellte oder zickzackförmige Verläufe aufweisen, wobei die Mittelachsen dieser Verläufe gekrümmt sind.

22. Reifen nach einem der Ansprüche 1 bis 21, dadurch **gekennzeichnet**, daß eine der Seiten eines jeden Sektors mit einer Schicht aus einer Selbstvulkanisierenden Gummimischung mit geringer Dicke versehen ist, die von einem Stahldraht verstärkt ist, der spiralig in der Ebene der Schicht angeordnet ist und ein sichtbares Ende aufweist.

23. Anordnung, die aus einem Reifen mit Sektoren (S) gemäß einem der Ansprüche 1 bis 12 sowie einer Felge (J) gebildet ist, dadurch **gekennzeichnet**, daß die Felge (J) mit einem Felgenboden (30) mit Randleisten (32) versehen ist, die radial nach innen gekehrt sind und in Umfangsrichtung durch Aussparungen (33) unterbrochen sind, und daß jeder Sektor (S) mit Umfangswülsten (6) versehen ist, die radial von der Innenseite her auf den Sitz (31) der Felge (J) aufsitzen.

24. Anordnung, die aus einem Reifen mit Sektoren (S) nach einem der Ansprüche 1 bis 12 und einer Felge (J) gebildet ist, dadurch **gekennzeichnet**, daß die Felge (J) am Felgenboden (30) mit Randleisten (32) versehen ist, deren Scheitel Enden (320) aufweisen, die axial nach innen gewandt sind und so zusammen mit den Sitzen der Felge (31) Rillen (R) bilden, die als Einpaßrillen festgesetzt sind, und daß jeder Sektor (S) mit Umfangswülsten (6) mit Formen versehen ist, die dazu eingerichtet sind, in die Rillen (R) zu passen.

25. Anordnung, die aus einem Reifen mit Sektoren (S) nach Anspruch 13 und einer Felge (J) gebildet ist, dadurch **gekennzeichnet**, daß die Felge (J) am Felgenboden (30) mit Randleisten (32) versehen ist, die radial nach außen gekehrt sind, mit axial nach außen gerichteten Scheiteln (320), sowie mit Sitzen (31), die von Öffnungen (33) durchsetzt sind, die zum Durchtritt der Gewindestangen (103) der Umfangswülste (10) eines jeden Sektors (S) bestimmt sind und somit die dauerhafte Befestigung der Wülste an der Felge (J) mittels Schraubenmuttern (34) gestatten.

FIG.1

FIG.8

FIG.2a

FIG.2b

FIG.3b

X

2

8

9

4

5

51

11

40

41

101

32

6

10

33

J

30

31

34

103

X'

FIG.3a

FIG.4

FIG.6

FIG.5a

FIG.5b

FIG.7a

FIG.7b